# EUROPÄISCHE PATENTANMELDUNG

(11) **EP 0 996 060 A2**
(43) Veröffentlichungstag der Anmeldung: **26.04.2000**
(21) Anmeldenummer: 99118939.0
(22) Anmeldetag: 25.09.1999
(51) Int. Cl.: G06F 11/00

(54) **Einzelprozessorsystem**

(30) Priorität: 17.10.1998 DE 19847986
(71) Anmelder: DaimlerChrysler AG, 70567 Stuttgart (DE)
(72) Erfinder: Gall, Richard, 73732 Esslingen (DE); Maier, Thomas, Dr., 1790 Copenhagen (DK); Schmid, Erwin, 70599 Stuttgart (DE); Trost, Jürgen, Dr., 72661 Grafenberg (DE); Volk, Gert, Dr., 70563 Stuttgart (DE)

(57) **Zusammenfassung**

Die Erfindung bezieht sich auf ein Einzelprozessorsystem zur Erfüllung einer geforderten Systemfunktion, insbesondere zur Ausführung einer sicherheitskritischen Steuerungsfunktion, mit einer Prozessoreinheit zur Erfüllung der geforderten Funktion und mit Fehlerreaktionsmitteln, welche das System bezüglich auftretender Fehler überwachen und bei einem festgestellten Fehler das System in einen vorgegebenen Fehlerreaktionszustand versetzen.

Erfindungsgemäß beinhalten die Fehlerreaktionsmittel zwei voneinander unabhängige, der Prozessoreinheit zur Fehlerüberwachung zugeordnete Watchdog-Einheiten, die bei Feststellen eines Fehlers das Versetzen des Systems in den Fehlerreaktionszustand veranlassen.

Verwendung z.B. in Steuergeräten von Kraftfahrzeugen.

## Beschreibung

Die Erfindung bezieht sich auf ein Einzelprozessorsystem zur Erfüllung einer geforderten Systemfunktion nach dem Oberbegriff des Anspruchs 1.

Unter einem Einzelprozessorsystem wird dabei ein System verstanden, bei denen nur eine Prozessoreinheit zur Erfüllung einer bestimmten Systemfunktion vorgesehen ist, im Gegensatz zu Multiprozessorsystemen, wie sie z.B. in den Offenlegungsschriften EP 0 086 601 A2, EP 0 635 784 A1 und DE 35 02 721 A1 beschrieben sind, bei denen mehrere Prozessoreinheiten parallel an einer bestimmten Systemaufgabe arbeiten. Zur Erfüllung weiterer Funktionen können selbstverständlich auch beim vorliegenden Einzelprozessorsystem weitere Prozessoreinheiten vorgesehen sein.

Die Verwendung nur einer Prozessoreinheit zur Erfüllung einer bestimmten Systemfunktion hat gegenüber Multiprozessorsystemen den Vorteil eines geringeren Realisierungsaufwandes, da letztere zusätzliche Prozessoreinheiten und Maßnahmen für den kollisionsfreien, parallelen Betrieb der mehreren Prozessoreinheiten benötigen. Eine Schwierigkeit von Einzelprozessorsystemen besteht jedoch darin, daß bei einem teilweisen oder völligen Ausfall der Prozessoreinheit die Systemfunktion eventuell nicht mehr erfüllt wird und das System in einen undefinierten Zustand gelangen kann. Dies ist insbesondere bei sicherheitskritischen Anwendungen unerwünscht, wie beispielsweise bei einer Verwendung in der Kraftfahrzeugtechnik zur Ausführung einer sicherheitskritischen Steuerungsfunktion.

Eine bekannte Maßnahme zur Behebung dieser Schwierigkeit besteht in einer redundanten Systemauslegung, bei der wenigstens zwei parallele Prozessoreinheiten ein Multiprozessorsystem bilden, das auch bei Ausfall einer Prozessoreinheit die Erfüllung der geforderten Systemfunktion durch die andere, noch funktionsfähige Prozessoreinheit gewährleistet. Dies ist jedoch wieder mit entsprechendem Realisierungsaufwand verbunden.

Es ist daher auch bereits bekannt, eine einzelne Prozessoreinheit durch eine sogenannte Watchdog-Einheit zu überwachen, die in Hardware oder Software ausgeführt sein kann und den von der Prozessoreinheit durchgeführten Programmablauf auf einen eventuell auftretenden Fehler überprüft. Dies geschieht dadurch, daß im Programmablauf der Prozessoreinheit an vorgegebenen Stellen ein Aufruf, d.h. eine Ansteuerung, der Watchdog-Einheit vorgesehen ist. Erfolgt dieser Aufruf nicht ordnungsgemäß, z.B. innerhalb eines von einem Taktgeber in der Watchdog-Einheit abgezählten Zeitraums, gibt die Watchdog-Einheit einen Rücksetzbefehl an die Prozessoreinheit ab und versetzt diese damit in einen definierten Ausgangszustand. Insbesondere für sicherheizskritische Anwendungen ist diese Maßnahme jedoch noch nicht immer zufriedenstellend, da sie beispielsweise bei einem Ausfall der Watchdog-Einheit nicht mehr gewährleistet ist und zudem in manchen Fällen bei Auftreten eines Fehlers neben dem Rücksetzen der Prozessoreinheit noch mindestens eine weitere Fehlerreaktionsmaßnahme gewünscht sein kann. So kann es beispielsweise im Fall der Ansteuerung eines sicherheitskritischen Aktors durch die Prozessoreinheit gewünscht sein, bei einem auftretenden Fehler nicht nur die Prozessoreinheit in ihren definierten Ausgangszustand rückzusetzen, sondern zusätzlich den Aktor in einen definierten Sicherheitszustand zu versetzen.

In der Offenlegungsschrift DE 43 30 940 A1 ist ein Einzelprozessorsystem der eingangs genannten Art offenbart, bei dem zwei Watchdog-Einheiten dergestalt parallel an einen von ihnen überwachten Mikroprozessor angekoppelt sind, daß ihre Eingänge von einem für beide Watchdog-Einheiten identischen Programmkontrollsignal beaufschlagbar sind, das vom Mikroprozessor erzeugt wird. Zusätzlich können die beiden Watchdog-Einheiten auf ihre Funktionstüchtigkeit hin vom Mikroprozessor überprüft werden, wozu der Mikroprozessor die jeweils überwachte Watchdog-Einheit über einen zweiten Eingang mit einem Störungstestsignal beaufschlagt, das einem nicht ordnungsgemäßen Programmkontrollsignal entspricht.

In der Offenlegungsschrift DE 44 30 177 A1 ist eine Überwachungsvorrichtung für einen Prozessor beschrieben, die eine Beobachtungsschaltung umfaßt, welche den korrekten Prozessorbetrieb überwacht und das Beaufschlagen einer vom Prozessor angesteuerten Apparatur mit einem fehlerhaften Prozessorausgangssignal dadurch verhindert, daß sie mit einem ansteuerbaren Schalter in die zur Apparatur führende Prozessorausgangsleitung eingeschleift ist. Nur bei erkannter Fehlenfreiheit des Prozessorbetriebs läßt die Beobachtungsschaltung das Prozessorausgangssignal zur Apparatur durch.

Der Erfindung liegt als technisches Problem die Bereitstellung eines Einzelprozessorsystems der eingangs genannten Art zugrunde, das mit relativ geringem Aufwand realisierbare Fehlerreaktionsmittel beinhaltet, die in der Lage sind, das System bei einem festgestellten Fehler in einen vorgegebenen Fehlerreaktionszustand zu versetzen und in gewissem Umfang ausfallsicher arbeiten.

Die Erfindung löst dieses Problem durch die Bereitstellung eines Einzelprozessorsystems mit den Merkmalen des Anspruches 1. Bei diesem System sind die wenigstens zwei Watchdog-Einheiten voneinander unabhängig der Prozessoreinheit zugeordnet, d.h. es sind für sie unterschiedliche Watchdog-Aufrufe vorgesehen, die von der Prozessoreinheit programmablaufabhängig abgegeben werden.

Dieses erfindungsgemäße System vermeidet den Aufwand von Multiprozessorsystemen und bietet dennoch durch die beiden parallelen Watchdog-Einheiten eine gewisse Ausfallsicherheit, speziell gegenüber einem Funktionsausfall einer dieser Watchdog-Einheiten. Letztere können in ihrem Grundprinzip wie herkömmliche Watchdog-Einheiten aufgebaut sein, wobei je nach Anwendungsfall zusätzliche Funktionalitäten implementiert sein können. Daß die beiden Watchdog-Einheiten voneinander unabhängig sind, bedeutet vorliegend, daß sie nicht beide durch ein und denselben Systemfehler ausfallen, so daß diesbezüglich die gewünschte, zuverlässigkeitserhöhende Watchdog-Redundanz gegeben ist.

Ein nach Anspruch 2 weitergebildetes Einzelprozessorsystem umfaßt einen von der Prozessoreinheit angesteuerten Aktor. Die Watchdog-Einheiten sind nun so ausgelegt, daß sie bei einem erkannten, aufgetretenen Fehler den Aktor in einen vorgegebenen Zustand versetzen, der für den Fall eines in einem sicherheitskritischen Bereich arbeitenden Aktors insbesondere ein unkritischer Sicherheitszustand sein kann. Zusätzlich kann vorgesehen sein, daß die Watchdog-Einheiten bei einem erkannten Fehler die Prozessoreinheit in ihren definierten Ausgangszustand zurücksetzen. In weiterer Ausgestaltung dieser Maßnahme wird gemäß Anspruch 3 der Aktor von der fehlererkennenden Watchdog-Einheit so lange in dem vorgegebenen Zustand gehalten, bis diese eine Freigabeinformation von der Prozessoreinheit erhält, nach deren Empfang die Watchdog-Einheit den Aktor wieder für normalen Betrieb freigibt.

Bei einem nach Anspruch 4 weitergebildeten Einzelprozessorsystem ist das Aufrufen der Watchdog-Einheiten an einer oder mehreren, definierten Stellen des von der Prozessoreinheit ausgeführten Programmablaufs vorgesehen, wobei der jeweilige Watchdog-Aufruf eine Information darüber beinhalten kann, von welcher Programmablaufstelle er ausgelöst wird. Die Watchdog-Einheiten enthalten geeignete Ablaufprüfmittel, die in der Lage sind, die Aufrufe auszuwerten und dadurch zu erkennen, ob die Prozessoreinheit das Programm ordnungsgemäß ausführt oder ob ein Systemfehler vorliegt. Eine entsprechend intelligente Auslegung der WatchdogEinheiten kann insbesondere die Erkennung von Fehlern ermöglichen, bei denen die Prozessoreinheit nur noch einen Teil des vollständigen Programmablaufs zyklisch durchläuft. Wenn sich in diesem Programmteil und im übrigen Programmteil je ein Aufruf einer solchen intelligenten Watchdog-Einheit befindet, wird zwar die Watchdog-Einheit in ausreichend kurzen Zeitabständen angesteuert, sie erkennt den Fehler jedoch trotzdem aufgrund des ausbleibenden Aufrufs vom nicht mehr abgearbeiteten Restprogramm.

Eine vorteilhafte Ausführungsform der Erfindung ist in den Zeichnungen dargestellt und wird nachfolgend beschrieben. Hierbei zeigen:
- Fig. 1: ein Blockschaltbild eines Einzelprozessorsystems mit angesteuertem Aktor und
- Fig. 2: ein Flußdiagramm eines Teils eines von der Prozessoreinheit in Fig. 1 abgearbeiteten Programms zur Steuerung des Aktors.

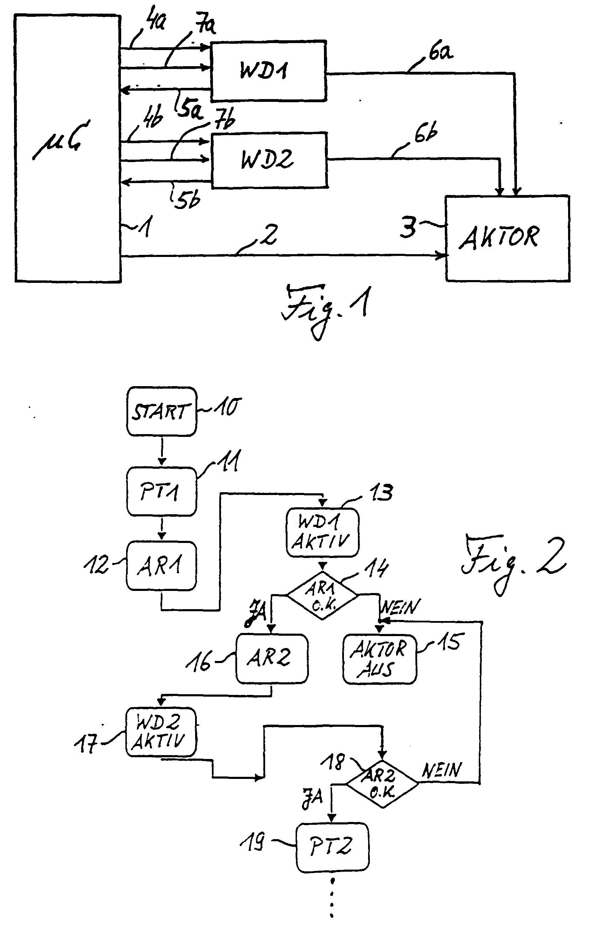

Das in Fig. 1 dargestellte Einzelprozessorsystem beinhaltet eine Mikroprozessoreinheit 1 und einen von diesem über eine Steuerleitung 2 ansteuerbaren Aktor 3 und kann beispielsweise in ein Kraftfahrzeug-Steuergerät mit sicherheitskritischer Funktion eingebaut sein. Charakteristischerweise verfügt das System des weiteren über zwei parallele Watchdog-Einheiten WD1, WD2. Im gezeigten Beispiel sind die beiden Watchdog-Einheiten WD1, WD2 als an die Prozessoreinheit 1 angekoppelte, externe Baueinheiten in Form entsprechender Watchdog-Schaltungen realisiert, alternativ können sie jedoch in Software realisiert sein, und eine oder beide Watchdog-Einheiten WD1, WD2 können bei Bedarf auch in die Prozessoreinheit 1 integriert sein, wie dies für herkömmliche Watchdog-Einheiten an sich bekannt ist.

Die beiden Watchdog-Einheiten WD1, WD2 erfüllen zum einen die herkömmliche Watchdog-Funktion. Hierzu werden sie von der Prozessoreinheit 1 über eine zugehörige Ansteuerleitung 4a, 4b immer dann angesteuert, wenn dies durch einen entsprechenden Watchdog-Aufruf in dem von der Prozessoreinheit 1 ausgeführten Programmablauf ausgelöst wird. Bleibt ein solches Ansteuersignal von der Prozessoreinheit 1 länger als ein vorgegebener, von einem in den Watchdog-Einheiten WD1, WD2 implementierten Taktgeber abgezählten Zeitraums aus, schließt die betreffende Watchdog-Einheit WD1, WD2 auf einen Systemfehler und gibt über eine Rücksetzleitung 5a, 5b ein Rücksetzsignal ab, durch welches die Prozessoreinheit 1 in einen vorgegebenen Ausgangszustand zurückgesetzt wird.

Über diese herkömmliche Funktionsweise hinaus besitzen die beiden Watchdog-Einheiten WD1, WD2 weitergehende Funktionseigenschaften, wozu sie als entsprechend intelligente Watchdog-Einheiten ausgelegt sind. Diese weitergehenden Eigenschaften beinhalten zum einen die Fähigkeit, daß die beiden Watchdog-Einheiten WD1, WD2 erkennen können, von welcher Stelle des von der Prozessoreinheit 1 durchgeführten Programmablaufs der jeweilige Watchdog-Aufruf stammt. Zu diesem Zweck enthält der von der Prozessoreinheit 1 an die jeweilige Watchdog-Einheit gesendete Aufruf eine entsprechende Herkunftsinformation über die Position des Aufrufs innerhalb des Programmablaufs. Die Watchdog-Einheiten WD1, WD2 enthalten dazu passende Ablaufprüfmittel, welche in der Lage sind, diese Herkunftsinformation auszuwerten und daraus zu schließen, ob das System ordnungsgemäß arbeitet oder ein Fehler vorliegt. Diese Ablaufprüfmittel können in herkömmlicher Weise z.B. eine vorab abgelegte Tabelle enthalten, in der die Identität der Aufrufe für die betreffende Watchdog-Einheit WD1, WD2 in der Reihenfolge dieser Aufrufe bei ordnungsgemäßem Programmablauf aufgelistet sind. Alternativ können die Ablaufprüfmittel aus einem Zähler und vorgegebenen Zeitwerten bestehen, welche die Zeitdauer angeben, die zwischen zwei aufeinanderfolgenden Aufrufen der betreffenden Watchdog-Einheit WD1, WD2 bei ordnungsgemäßen Programmablauf höchstens verstreicht. Ist der vom Zähler abgezählte Zeitraum zwischen zwei aufeinanderfolgenden Aufrufen größer, interpretiert dies die Watchdog-Einheit WD1, WD2 als Fehler. Dabei können die Zeitwerte für verschiedene aufeinanderfolgende Aufrufe bei Bedarf verschieden gewählt sein, z.B. für den Zeitraum zwischen einem ersten und zweiten Aufruf anders als zwischen dem zweiten und einem dritten Aufruf innerhalb eines Programmzyklus.

Eine weitere Eigenschaft der Watchdog-Einheiten WD1, WD2 besteht in ihrer Fähigkeit, bei einem erkannten Fehler nicht nur die Prozessoreinheit 1 rücksetzen zu können, sondern zudem den Aktor 3 in denjenigen definierten Zustand zu versetzen, der hierfür bei einem auftretenden Systemfehler vorgegeben wird, wobei es sich insbesondere um einen unkritischen Sicherheitszustand handeln kann. Zu diesem Zweck führt von jeder Watchdog-Einheit WD1, WD2 eine entsprechende Aktoransteuerleitung 6a, 6b zum Aktor 3. Die Watchdog-Einheiten WD1, WD2 sind so ausgelegt, daß sie bei einem aufgetretenen, von ihnen erkannten Fehler den Aktor 3 in diesem definierten Zustand halten bis sie über eine hierzu dienende Freigabeleitung 7a, 7b von der Prozessoreinheit 1 eine Freigabeinformation empfangen. Die Prozessoreinheit 1 gibt diese Freigabeinformation 7a, 7b ab, sobald sie erkennt, daß das System wieder funktionsbereit ist, und die Freigabeinformation führt in den Watchdog-Einheiten WD1, WD2 dazu, daß diese über die betreffende Ansteuerleitung 6a, 6b den Aktor 3 wieder für normalen, von der Prozessoreinheit 1 über die zugehörige Ansteuerleitung 2 bewirkten Betrieb freigeben.

Fig. 2 veranschaulicht die Funktion der Watchdog-Einheiten WD1, WD2 anhand eines beispielhaft ausgewählten, anfänglichen Teils des von der Prozessoreinheit 1 zyklisch durchgeführten Programmablaufs. Nach dem Start eines Programmzyklus (Schritt 10) wird zunächst ein erster Programmteil PT1 durchgeführt, der u.a. eine Freigabe des Aktors 3 beinhaltet (Schritt 11). Am Ende dieses ersten Programmteils PT1 sind hintereinander jeweils ein Aufruf jeder der beiden Watchdog-Einheiten WD1, WD2 vorgesehen. Zunächst erfolgt ein erster Aufruf AR1 für die erste Watchdog-Einheit WD1, wobei dieser Aufruf AR1, wie oben erläutert, eine Information darüber enthält, daß er am Ende des ersten Programmteils PT1 in den Programmablauf implementiert ist und auf diese Weise den ersten Aufruf für die erste Watchdog-Einheit WD1 innerhalb des Programmzyklus bildet (Schritt 12).

Auf diesen Aufruf AR1 hin erfolgt die Programmüberwachung entsprechend der ersten Watchdog-Einheit WD1 (Schritt 13). Dazu prüft diese, wie ebenfalls oben angedeutet, ob der eingetroffene Aufruf der richtige Aufruf zum richtigen Zeitpunkt ist und daher einem ordnungsgemäßen Programmablauf entspricht oder nicht (Schritt 14). Wenn nicht, wird der Aktor 3 von der ersten Watchdog-Einheit WD1 in den definierten Zustand versetzt, beispielsweise abgeschaltet (Schritt 15). Gleichzeitig setzt die Watchdog-Einheit WD1 die Prozessoreinheit 1 zurück. Es kann dann eine Fehlerbehandlung in der Prozessoreinheit 1 erfolgen. Nach Fehlerbehebung sendet die Prozessoreinheit 1 dann ein Freigabesignal über die Freigabeleitungen 7a, 7b an die Watchdog-Einheiten WD1, WD2, die daraufhin den Aktorbetrieb wieder freigeben.

Stellt die Watchdog-Überwachung in der ersten Watchdog-Einheit WD1 hingegen einen ordnungsgemäßen ersten Aufruf AR1 und damit einen insoweit bislang fehlerfreien Programmablauf fest, folgt als nächster Schritt im Programmablauf der erste Aufruf AR2 für die zweite Watchdog-Einheit WD2 (Schritt 16). Mit dieser Aktivierung der zweiten Watchdog-Einheit WD2 (Schritt 17) erfolgt die von dieser durchgeführte Watchdog-Überwachung des Programmablaufs, indem sie prüft, ob dieser Aufruf AR2 in der richtigen Reihenfolge bzw. innerhalb des hierfür vorgesehenen Zeitraums einging und von der richtigen Stelle im Programmablauf stammt (Schritt 18). Ist dies nicht der Fall, schließt die zweite Watchdog-Einheit WD2 auf einen Systemfehler, steuert den Aktor 3 in den hierfür vorgesehenen, definierten Zustand, beispielsweise indem sie ihn abschaltet, und veranlaßt gleichzeitig eine Rücksetzung der Prozessoreinheit 1 (Schritt 15), die dann den Programmzyklus nach Fehlerbehebung wieder neu startet.

Schließt hingegen auch die zweite Watchdog-Einheit WD2 bei ihrem ersten Aufruf AR2 am Ende des ersten Programmteils PT1 auf einen bislang ordnungsgemäßen Programmablauf, setzt die Prozessoreinheit 1 den Programmablauf durch Ausführen eines anschließenden zweiten Programmteils PT2 fort (Schritt 19). Diese Vorgehensweise wiederholt sich bis zum Ende des Programmzyklus, wobei jeweils an geeigneten Programmstellen erneute Aufrufe für die beiden Watchdog-Einheiten WD1, WD2 vorgesehen sind.

Zweckmäßigerweise sind somit Aufrufe für die beiden Watchdog-Einheiten WD1, WD2 an entscheidenden Stellen des Programmablaufs derart vorgesehen, daß diese zum einen ausreichend oft angesteuert werden, um kein unerwünschtes Rücksetzen der Prozessoreinheft 1 zu verursachen, und zum anderen eine hinreichend feine kontrolle der Programmausführung gewährleisten. Je weniger Aufruf stellen im Programmzyklus vorgesehen sind, desto höher ist die Fehlererkennungssicherheit, wenn die Watchdog-Einheiten WD1, WD2 nur auf die Zeitabstände zwischen aufeinanderfolgenden Aufrufen reagieren, ohne die Aufrufreihenfolge auszuwerten. Denn je weniger Aufrufstellen vorhanden sind, umso geringer ist die Wahrscheinlichkeit, daß sich ein solcher Aufruf innerhalb eines Programmteils befindet, der von der Prozessoreinheit 1 aufgrund eines Fehlers zyklisch durchlaufen wird, ohne daß diese den gesamten Programmzyklus abarbeitet. Sind die Watchdog-Einheiten WD1, WD2 hingegen so ausgelegt, daß sie auch die Aufrufreihenfolge auswerten können, so sind sie in der Lage, einen solchen Fehler ohne weiteres daran zu erkennen, daß stets nur noch der zu ein und derselben Programmstelle gehörige Aufruf eingeht und nicht mehr nacheinander alle in einen Programmzyklus implementierten Aufrufe.

Wie anhand der obigen Beschreibung eines vorteilhaften Beispiels deutlich wird, kann das erfindungsgemäße Einzelprozessorsystem auch für sicherheitskritische Anwendungen in einem Steuergerät, einer Elektronikarchitektur oder dergleichen eingesetzt werden und bewirken, daß das System bei einem auftretenden Fehler einen hierzu vorab definierten Zustand einnimmt. Vorteilhafterweise kommt das System mit einer einzelnen Prozessoreinheit aus. Dennoch kann im Anwendungsfall eines Aktors dieser auch nach einem Ausfall der Prozessoreinheit in einen definierten Zustand versetzt, insbesondere abgeschaltet werden, was erfindungsgemäß von der den Fehler erkennenden Watchdog-Einheit bewirkt wird.

## Patentansprüche

1. Einzelprozessorsystem zur Erfüllung einer geforderten Systemfunktion, insbesondere zur Ausführung einer sicherheitskritischen Steuerungsfunktion, mit
- einer Prozessoreinheit (1) zur Erfüllung der geforderten Systemfunktion und
- Fehlerreaktionsmitteln, welche das Prozessorsystem bezüglich auftretender Systemfehler überwachen und wenigstens zwei der Prozessoreinheit (1) zur Fehlerüberwachung zugeordnete Watchdog-Einheiten (WD1, WD2) aufweisen, die bei einem festgestellten Fehler das Prozessorsystem in einen vorgegebenen Fehlerreaktionszustand versetzen,
**dadurch gekennzeichnet, daß**
- für die beiden Watchdog-Einheiten voneinander verschiedene, von der Prozessoreinheit programmablaufabhängig abgegebene Watchdog-Aufrufe (AR1, AR2) vorgesehen sind.

2. Einzelprozessorsystem nach Anspruch 1, weiter
**dadurch gekennzeichnet, daß**
- es einen von der Prozessoreinheit (1) angesteuerten Actor (3) umfaßt und
- das Versetzen des Prozessorsystems in den Fehlerreaktionszustand beinhaltet, daß die den Fehler erkennende Watchdog-Einheit (WD1, WD2) den Aktor (3) in einen hierzu vorgegebenen Zustand versetzt.

3. Einzelprozessorsystem nach Anspruch 2, weiter
**dadurch gekennzeichnet, daß**
die den Fehler erkennende Watchdog-Einheit (WD1, WD2) den Aktor (3) in dem vorgegebenen Zustand hält, bis sie eine Freigabeinformation von der Prozessoreinheit (1) erhält.

4. Einzelprozessorsystem nach einem der Ansprüche 1 bis 3, weiter
**dadurch gekennzeichnet, daß**
die Watchdog-Aufrufe (AR1, AR2) an einer oder mehreren Stellen des von der Prozessoreinheit (1) ausgeführten Programmablaufs implementiert sind und die Watchdog-Einheiten (WD1, WD2) Ablaufprüfmittel beinhalten, welche das fehlerfreie Eintreffen eines jeweiligen Watchdog-Aufrufs überprüfen und bei fehlerbehaftetem Aufruf auf einen aufgetretenen Systemfehler schließen.
